# EUROPEAN PATENT APPLICATION

(11) **EP 1 574 954 A1**
(43) Date of publication of application: **14.09.2005**
(21) Application number: 04005991.7
(22) Date of filing: 12.03.2004
(51) Int. Cl.: G06F 9/46, G06F 13/00, G06F 9/44

(54) **Automatic generation of translation code**

(71) Applicant: SAP Aktiengesellschaft, 69190 Walldorf (DE)
(72) Inventor: Martinez, Juan Carlos, 68161 Mannheim (DE); Philipp, Ralf, 69234 Dielheim (DE); Sommerlade, Frank, 68169 Wiesloch (DE)
(74) Representative: Cohausz & Florack

(57) **Abstract**

The present invention relates to a computer-implemented method, a computer program product, computer program, a computer system for automatically configuring a translation code generator, where data is stored within a server, where said data is translated within said server into a data format required by a client using a translation code, and where said translated data is transmitted from said server to said client. The time for technical implementation is reduced to a few seconds by transmitting a change of data format from client to server, by adapting said translation code according to the changed data format and by converting automatically the data on the server with the changed translation code.

## Description

### Field of the Invention

The present invention relates to computer-implemented method for automatically configuring a translation code for use in translating data stored in a server into a data format required by a client.

The invention further relates to a computer program product readable by a computer and embodying a program of instructions capable of automatically configuring a translation code, the program comprising instructions operable to cause the computer to perform the steps of translating data into a data format required by a client using a translation code within the server, and transmitting the translated data from the server to the client.

The invention also relates to a computer program of instructions capable of automatically configuring a translation code, the program comprising instructions operable to cause the computer to perform the steps of translating data into a data format required by a client using a translation code within the server.

Eventually the invention relates to a client-server computer system capable of automatically configuring a translation code, the system comprising a code generator, associated with the server, that provides the translation code and that includes a sub-component that adapts the translation code automatically to a change of data format upon receipt of a data object definition message; and means, which uses the translation code provided by the code generator, for translating data into a data format required by a client

### Background

In large corporations and institutions, computer networks today are generally comprised of many different data management systems and thus provide a heterogeneous landscape. Moreover, over time, such data management systems frequently become more and more heterogeneous, as new systems are integrated into the landscape and existing systems are updated.

Such data management systems may store and provide data in any number of different data formats. The use of standard messaging technologies, like extended markup language (XML), facilitates the providing and exchanging data between different systems with reduced difficulty; however, not all data management systems use standardized formats and languages. Most of the systems support the use of XML. By using such standardised language, data consistency within large corporations and institutions might be accomplished.In different data management systems different data are available and used. Therefore, many times when a client requests data from a server, the relevant data may first have to be converted from one format to another before they are provided from the server to the client.

Sometimes, manual hard coding of the necessary conversion routines is done for transmitting converted data from a server to a client. Hard coding of the conversion routines, however, is costly, inflexible, and labour intensive. The more different systems are in a computer network the more data conversion routines have to be coded. Also, the increased number of changes within the data structures of management systems due to fast growing markets, and technologies demands for a lot of data conversion routines being re-coded. As a result, rather than manually change a hard-coded conversion routine, in order to reduce the related coding costs it is common practice to provide more data to the client than actually necessary and relevant for the particular client. This practice consumes bandwidth and produces traffic that is not necessary.

Automatic translation code generation would provide .The data requested by the client is provided in an appropriate data format and allows transfer of only the relevant data, thus saving bandwidth. One example of a known code generator is described in Christian Georgescu, "Code Generation Templates Using XML and XSL", C/C⁺⁺ Users Journal, January 2002, p. 6-19. In Georgescu, an implementation of XML or XSL for Java and C++ code generation is discussed. These code generators allow generation of C⁺⁺ or Java computer code from a data set of a different data format. A meta-model of the provided data provides a structure for an information model that comprises data in XML-format. Using the meta-model, a design logic may be coded in XSL for generating implementation logic that allows a code generator to code the information model into a different data format without manual labour.

However, even with known code generators, it is not possible to react automatically to changes within a data format required by a client. The known code generators alone do not provide automatic adaptation to changes in a data object model, e.g a data format, on the side of the client.

### SUMMARY

The invention allows to adapt automatically the translation of data to changes in current data object models on the side of the client in heterogeneous systems, translating data within a server into a data format required by a client using the translation code, transmitting the translated data from the server to the client, transmitting a change of the data format from the client to the server in a data object definition message; and automatically adapting the translation code to the changed data format upon receipt of the data object definition message. Transmitting a description of an actual data model of a client in a data object definition message may allow generating a translation code in the server automatically. The translation code may allow converting the data in the server into a data format required by the client. This data format may only comprise the data required by the client.

In certain embodiments consistent with the present invention, the client transmits a data object message comprising the current data model of the client to the server. The server automatically generates a new translation code based on the current data model of the client. The newly generated translation code may then be used to convert the data in the server into a data format required by the client.

Since there might be no need for human coding when modifying the translation codes, e.g. the data conversion routines, the time to react on changes might be minimised. For allowing automatic adaptation of the translation code, only changes in the data object definition messages may have to be implemented. This reduces labour time and costs. The time for technical implementation may be reduced to a few seconds since the changes at the server side are carried out automatically.

By converting automatically the data requested from the server by the translation code it may be possible to only transmit relevant data to the client. Unnecessary data may be filtered out.

The number of coding errors for implementing a change in the translation code and the number of personnel needed for implementing the changes may be reduced. Different and new clients may be quickly added or removed from the network. The clients only need to be able to deliver data object definition messages to the client. The data object definition messages comprise information about the data format required by the client. The knowledge of this data format allows the server to adapt a translation code to a certain client.

It is proposed, according to a preferred embodiment that said data object definition message is automatically transmitted from said client to said server upon change of said data format within said client. In this case, a data object definition, e.g. a data format, has been modified at the side of the client. This modification may trigger transmitting the data containing the data object definition message from the client to the server. The server might only need to listen to incoming data object definition messages and may then use these messages for extracting the information requested by the clients and for re-coding automatically the translation code.

According to a preferred embodiment said translation code is adapted to said changed data format within a translation code generator upon reception of the data object definition message. In this case, the server comprises a translation code generator. Within the translation code generator coding routines are implemented which allow automatically changing a translation code. The changed translation code may then be provided by the translation code generator for translating data. Within the translation code generator different translation codes may be stored for different clients and different systems.

According to a further embodiment it is preferred that said translated data is transmitted from said server to said client using a standard object description language like, for example an extended markup language (XML). By using a standard object description language the implementation is simplified and allows programmers to use their common programming knowledge. The same applies for an embodiment wherein said data object definition message is transmitted from said client to said server using a standard object description language, for example an extended markup language. The data object definition message may then comprise content and structure, as XML allows storing structured content.

According to a further preferred embodiment the data required by the client is extracted and translated from said stored data by said translation code prior to sending said translated data from said server to said client. The translation code is used for extracting the relevant data from the data stored in the server. The relevant data may then be translated into a data format preferred by the particular client. This may be done prior to sending the data to the client.

By using XSL for translating in the translation code said data into said data format used by said client, standard programming routines and programming knowledge may be used.

To avoid "information loops" with respect to the data format of the data provided to the clients, it is important to fix the roles of server and client within the process. The server must publish and have the ownership of the data definition format. A client may be responsible for definition and distribution of the meta-data of the data objects being used.

Since data object definition messages received within the server may directly modify code on the server side, authorisation management has to be used in order to control and restrict the reaction of the server to different data object definition messages. Therefore, it is proposed to manage access to said server by said data object definition messages by an authorisation management. The authorisation management may be comprised within the server. It may be kept track of clients being authorised to initiate translation code generation, which may be so-called "trusted systems". Moreover, authorisation may be based on user "roles". Each user may have certain rights. E.g. system administrators may have all the same rights. Coded information about the users should be send embedded in messages exchanged between servers and clients.

To connect more than one data client to a single server, it is proposed that data formats of different clients are managed by version management within the server. In that case a particular translation code for a particular client may be stored. For each client a different translation code may be used. Also clients of different groups, e.g. different data management systems, may use one particular translation code. Version identification may be based on two parameters, which may be encapsulated and exchanged within messages between clients and servers. One parameter may comprise information concerning the data model version, e.g. by using time stamps or other string combinations. This allows identification within the system. Another parameter may allow the identification of a system within a computer network. This could be for example an IP number.

A further embodiment is a computer implemented method wherein upon change of said data format said server requests said data object definition message from said client and said client transmits said data object definition message upon request to said server. By using data format version identification within a server, the server may detect automatically changes in the data format of the client. This may be done during exchange of master data. In case a new data format is detected by the server the server may trigger the request of a new data object definition message. Upon reception of this data object definition message, the server may trigger a generation of a new data translation code for the given client. The existing translation code may then be re-coded.
Thereafter, data to be transmitted to the client will be translated by the new translation code.

It is also proposed that said server automatically detects changes in said data format. It is further proposed that said changes in said data format are detected by version identification. It is further preferred that said changes in said data format are detected during exchanging master data between said server and said client.

A further aspect of the invention is a computer program product readable by a computer and embodying a program of instructions capable of automatically configuring a translation code, the program comprising instructions operable to cause the computer to perform the steps of translating data into a data format required by a client using a translation code within the server, transmitting the translated data from the server to the client, transmitting a change of the data format from the client to the server via a data object definition message; and automatically adapting the translation code to the changed data format upon the server's reception of the data object definition message.

A further aspect of the invention is a computer program of instructions capable of automatically configuring a translation code, the program comprising instructions operable to cause the computer to perform the steps of translating data into a data format required by a client using a translation code within the server, transmitting the translated data from the server to the client, transmitting a change of the data format from the client to the server via a data object definition message, and automatically adapting the translation code to the changed data format upon the server's reception of the data object definition message.

Eventually a further aspect of the invention is A client-server computer system capable of automatically configuring a translation code, the system comprising a code generator, associated with the server, that provides the translation code and that includes a sub-component that adapts the translation code automatically to a change of data format upon receipt of a data object definition message, and means, which uses the translation code provided by the code generator, for translating data into a data format required by a client, wherein translated data and the change of data format with the data object definition message are transmitted from the server to the client.

Further advantages result from the dependent claims.

Referring now to the drawings, in which like numerals represent like elements throughout the several figures, aspects of the present invention and the exemplary operating environment will be described.

### BRIEF DESCRIPTION OF THE DRAWINGS

The accompanying drawings, which are incorporated in and constitute a part of this specification, illustrate various embodiments of the invention and, together with the description, serve to explain the principles of the invention. In the drawings:
- FIG. 1: illustrates an exemplary computer system used to implement one or more embodiments of the present invention;
- FIG. 2: is a diagram illustrating translation code generation after a change in the object model, according to one or more embodiments of the present invention; and
- FIG. 3: is a diagram illustrating translation code generation after receiving data with a new data object definition, according to one or more embodiments of the present invention.

### DETAILED DESCRIPTION

Methods and systems consistent with the principles of the present invention enable a server to automatically generate a new translation code based on the current data model of the client. The newly generated translation code may then be used to convert the data in the server into a data format required by the client.

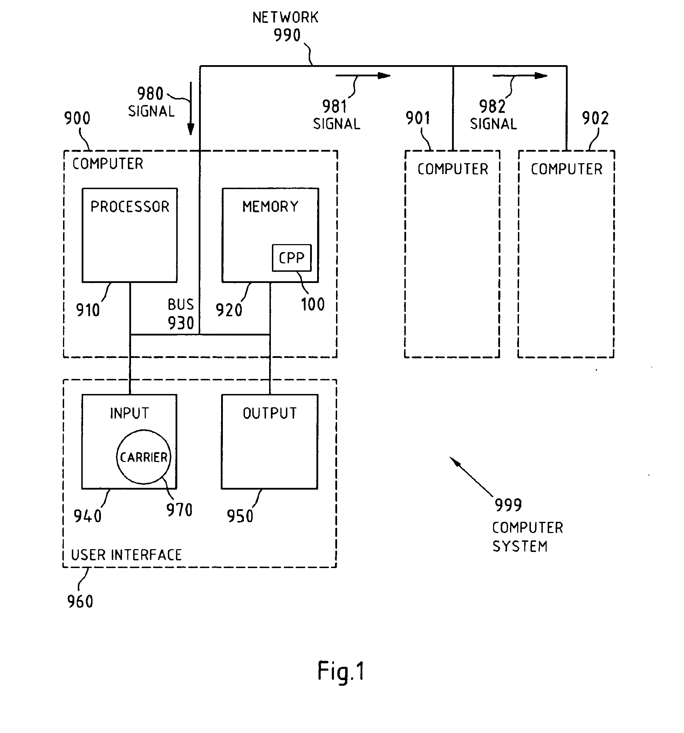

FIG. 1 illustrates a simplified block diagram of an exemplary computer system 999 for implementing the principles of the present invention. As shown in FIG. 1, computer system 999 may have a plurality of computers 900, 901, 902 (or even more). Computer 900 can communicate with computers 901 and 902 over network 990. Computer 900 has processor 910, memory 920, bus 930, and, optionally, input device 940 and output device 950 (I/O devices, user interface 960). As illustrated, the invention is implemented by computer program product 100 (CPP), carrier 970 and signal 980.

With respect to computer 900, computer 901/902 is sometimes referred to as a "remote computer." Computer 901/902 may be, for example, a server, a peer device or other common network node, and may have many or all of the elements described relative to computer 900.

Computer 900 may be, for example, a conventional personal computer (PC), a desktop device or a hand-held device, a multiprocessor computer, a pen computer, a microprocessor-based or programmable consumer electronics device, a minicomputer, a mainframe computer, a personal mobile computing device, a mobile phone, a portable or stationary personal computer, a palmtop computer or the like.

Processor 910 may be, for example, a central processing unit (CPU), a micro-controller unit (MCU), a digital signal processor (DSP), or the like.

Memory 920 may be one or more elements that temporarily or permanently store data and instructions. Although memory 920 is illustrated as part of computer 900, memory can also be implemented in network 990, in computers 901/902 and in processor 910 itself (e.g., cache, register), or elsewhere. Memory 920 can be a read only memory (ROM), a random access memory (RAM), or a memory with other access options. Memory 920 is physically implemented by computer-readable media, for example: (a) magnetic media, like a hard disk, a floppy disk, or other magnetic disk, a tape, a cassette tape; (b) optical media, like optical disk (CD-ROM, digital versatile disk - DVD); (c) semiconductor media, like DRAM, SRAM, EPROM, EEPROM, memory stick.

Optionally, memory 920 can be distributed. Portions of memory 920 can be removable or non-removable. For reading from media and for writing in media, computer 900 may use well-known devices such as, for example, disk drives, tape drives, etc.

Memory 920 stores modules such as, for example, a basic input output system (BIOS), an operating system (OS), a program library, a compiler, an interpreter, and a text-processing tool. Such modules are commercially available and can be installed on computer 900. As they are well known in the state of the art, such modules are not illustrated in FIG. 1.

CPP 100 has program instructions and, optionally, data that cause processor 910 to execute method steps consistent with the present invention. In other words, CPP 100 can control the operation of computer 900 and its interaction in network system 999 so that is operates to perform in accordance with the invention. For example and without the intention to be limiting, CPP 100 can be available as source code in any programming language, and as object code ("binary code") in a compiled form.

Although CPP 100 is illustrated as being stored in memory 920, CPP 100 can be located elsewhere. CPP 100 can also be embodied in carrier 970.

Carrier 970 is illustrated outside computer 900. For communicating CPP 100 to computer 900, carrier 970 may be conveniently inserted into input device 940. Carrier 970 may be implemented as any computer readable medium, such as a medium largely explained above (cf. memory 920). Carrier 970 may be an article of manufacture having a computer readable medium with computer readable program code to cause the computer to perform methods of the present invention. Further, signal 980 can also embody computer program product 100.

Examples of CPP 100, carrier 970, and signal 980 have been described in connection with computer 900. However, other type of carriers and signals may embody computer program products (CPP) to be executed by further processors in computers 901 and 902.

Input device 940 provides data and instructions for processing by computer 900. Device 940 can be, for instance a keyboard, a pointing device (e.g., mouse, trackball, cursor direction keys), microphone, joystick, game pad, scanner, or disc drive. Although the examples are devices with human interaction, device 940 can also be a device without human interaction, for example, a wireless receiver (e.g., with satellite dish or terrestrial antenna), a sensor (e.g., a thermometer), a counter (e.g., a goods counter in a factory). Input device 940 can serve to read carrier 970.

Output device 950 presents instructions and data that have been processed. For example, this can be a monitor or a display, (cathode ray tube (CRT), flat panel display, liquid crystal display (LCD), speaker, printer, plotter, vibration alert device. Output device 950 can communicate with the user, but it can also communicate with further computers.

Input device 940 and output device 950 can be combined to a single device. Any device 940 and 950 can be provided optionally, as they may or may not pertain to various embodiments of the present invention.

Bus 930 and network 990 provide logical and physical connections by conveying instruction and data signals. While connections inside computer 900 are conveniently referred to as "bus 930", connections between computers 900-902 are referred to as "network 990". Optionally, network 990 includes gateways which are computers that specialize in data transmission and protocol conversion.

Devices 940 and 950 are coupled to computer 900 by bus 930 (as illustrated) or by network 990 (optional). While the signals inside computer 900 are mostly electrical signals, the signals in network may be electrical, electromagnetic, optical or wireless (radio) signals.

Networks are commonplace in offices, enterprise-wide computer networks, intranets and the Internet (e.g., world wide web or WWW). Network 990 can be a wired or a wireless network. To name a few network implementations, network 990 can be, for example, a local area network (LAN), a wide area network (WAN), a public switched telephone network (PSTN); a Integrated Services Digital Network (ISDN), an infra-red (IR) link, a radio link, like Universal Mobile Telecommunications System (UMTS), Global System for Mobile Communication (GSM), Code Division Multiple Access (CDMA), or satellite link.

A variety of transmission protocols, data formats and conventions is known and may include, for example, transmission control protocol/internet protocol (TCP/IP), hypertext transfer protocol (HTTP), secure HTTP, wireless application protocol (WAP), unique resource locator (URL), a unique resource identifier (URI), hypertext markup language (HTML), extensible markup language (XML), extensible hypertext markup language (XHTML), wireless markup language (WML), and Standard Generalized Markup Language (SGML).

Interfaces coupled between the elements are also well known in the art, and not shown in FIG. 1. An interface can be, for example, a serial port interface, a parallel port interface, a game port, a universal serial bus (USB) interface, an internal or external modem, a video adapter, or a sound card.

Computers and the programs that operate them are closely related. As used hereinafter, phrases, such as "the computer provides" and "the program provides," are used interchangeably to express actions by a computer that is controlled by a program.

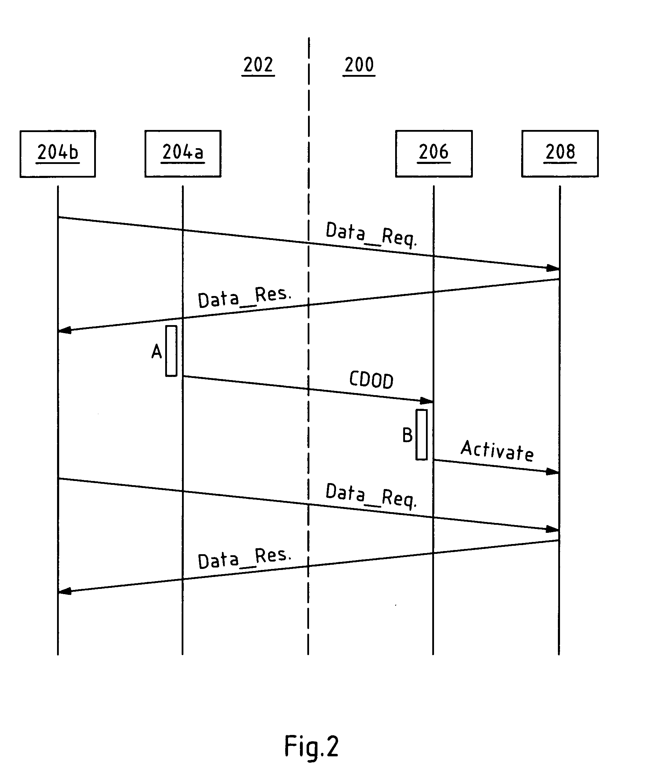

Fig. 2 depicts a translation code generation after a change in the object model. Depicted are a client 202 and a server 200. The client 202 comprises a data object definition tool 204a and a data management tool 204b. Server 200 comprises a translation code generator 206 and a data translation service 208. Depicted is a flow chart of messages between the client 202 and the server 200.

During normal operation, data management tool 204b requests from data translation service 208 data of said server 200. This is done via a request message Data_Req. Within the data translation service 208 the data requested by the client 202 are extracted from the data in the server. Furthermore, the data is put into a data format required by the client 202. The translation into the data format for the client 202 is done using a translation code. The translation code is adapted to the data model of the client 202. Thus, the data within the server is put into the right format and then transmitted from the server 200 to the client 202 in a response message Data_Res.

In the event the data model within the client 202 changes A, the data object definition tool 204a transmits a client data object definition message CDOD to translation code generator 206 within server 200. Upon reception of this client data object definition message CDOD, translation code generator 206 generates a new translation code B depending on the object model of the client 202. The data object definition message comprises information about the data format requested by the client 202. After the translation code is generated B this translation code is activated and transmitted to data translation service 208.

After activation of a new translation code, this translation code may be used by data translation service 208. In this case, after reception of a new data request message Data_Req from data management tool 204b, data translation service 208 translates the data in the server according to the new translation code, and responses to the request message by transmitting the data in the correct data format Data_Res.

By adapting the translation code automatically, no manual coding or adaptation of the translation code is necessary.

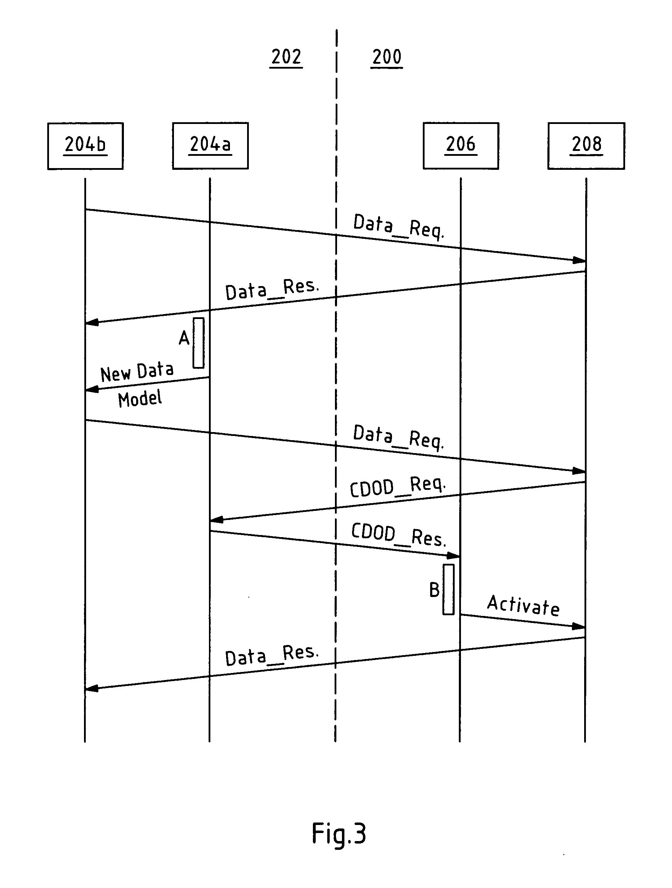

Fig. 3 depicts a translation code generation after receiving data comprising a new data object definition. During normal operation data management tool 204 requests data Data_Req from data translation service 208 within server 200. Data translation service 208 translates data within the server and provides the translated data in an appropriate data format to the client 202.

In case the data model within the client 202 changes A, the data object definition tool 204a informs data management tool 204b about the new data model in a new data modelmessage. Upon the next data request Data_Req, the data request message may comprise information that a new data model is supported by client 202. The receiving server 200, in particular the data translation service 208, detects that a new data model is supported by the client 202. This may be done by version management within data translation service 208.

In case a new data model is required by the client 202 and detected within the server 202, translation code generator 208 requests CDOD_Req a data object definition message from data object definition tool 204a. Data object definition tool 204a provides the translation code generator 208 with the new client data object definition message in a response message CDOD_Res. In translation code generator 206 a new translation code is generated B.

After generation of the new translation code B, it is activated and provided to data translation service 208. Data translation service 208 uses the new translation code for translating the data requested by the client in the previous data request message. The data response message Data_Res now is in an appropriate format as the new translation code has been used.

Within data translation service 208, or within any other entity of server 200 an authorisation control may be activated. This means that the client 202 may only access data and may only initiate a change within the translation code if it has authorisation to do so. This authorisation may be checked by said server 200.

While the invention has been particularly shown and described with reference to examples and embodiments described above and illustrated in the figures, it is to be understood by those skilled in the art that various changes in form and detail may be made without departing from the spirit and scope of the invention. For example, the scope of the invention is in no way limited to the exemplary computer systems described and illustrated herein. In sum, the metes and bounds of the present invention include the described embodiments and examples as well as all variations and modifications thereof, and shall be limited soley by the scope of the claims appended hereto

### REFERENCE NUMBERS

- 200: server
- 202: client
- 204a: data object definition tool
- 204b: data management tool
- 206: translation code generator
- 208: data translation service
- 900: computer
- 910: processor
- 920: memory
- 930: bus
- 940: input device
- 950: output device
- 960: user interface
- 970: program carrier
- 980: program signal
- 999: computer network system

## Claims

1. A computer-implemented method for automatically configuring a translation code, the method comprising the steps of:
translating data within a server into a data format required by a client using the translation code; transmitting the translated data from the server to the client;
transmitting a change of the data format from the client to the server in a data object definition message; and
automatically adapting the translation code to the changed data format upon receipt of the data object definition message.

2. The computer-implemented method of claim 1, wherein the data object definition message is automatically transmitted from the client to the server upon change of the data format within the client.

3. The computer-implemented method of claim 1 or 2,
wherein the translation code is adapted to the changed data format within a translation code generator upon receipt of the data object definition message.

4. The computer-implemented method of one of claims 2 or 3, wherein the translated data is transmitted from the server to the client using a standard object description language.

5. The computer-implemented method of one of claims 2 to 4, wherein the data object definition message is transmitted from the client to the server using a standard object description language.

6. The computer-implemented method of one of claims 2 to 5, wherein the data format required by the client is extracted and translated from the stored data by the translation code prior to sending the translated data from the server to the client.

7. The computer-implemented method of one of claims 2 to 6, wherein the translation code uses XSL for translating the data into said the data format required by the client.

8. The computer-implemented method of one of claims 2 to 7, wherein the server provides a data object definition message format.

9. The computer-implemented method of one of claims 2 to 8, further comprising the step of managing access to the server by the data object definition messages via an authorization management procedure.

10. The computer-implemented method of one of claims 2 to 9, further comprising the step of managing data formats of different clients via a version management procedure.

11. The computer-implemented method of one of claims 1 to 10, wherein, upon change of the data format, the server requests the data object definition message from the client and the client transmits the data object definition message upon request to the server.

12. The computer-implemented method of claim 11, wherein the server automatically detects changes in the data format of data associated with the server.

13. The computer-implemented method of claim 12, wherein the changes in the data format are detected by version identification.

14. The computer-implemented method of one of claims 12 or 13, wherein the changes in the data format are detected during an exchange of master data between the server and the client.

15. The computer-implemented method of one of claims 11 to 14, wherein the translation code is adapted to the changed data format within a translation code generator upon reception of the data object definition message.

16. The computer-implemented method of one of claims 11 to 15, wherein the translated data is transmitted from the server to the client using a standard object description language.

17. The computer-implemented method of one of claims 11 to 16, wherein the data object definition message is transmitted from the client to the server using a standard object description language.

18. The computer-implemented method of one of claims 11 to 17, wherein the data required by the client is extracted and translated from the stored data by the translation code prior to sending the translated data from the server to the client.

19. The computer-implemented method of one of claims 11 to 18, wherein the translation code uses XSL for translating the data into the data format used by the client.

20. The computer-implemented method of one of claims 11 to 19, wherein the server provides a data object definition message format.

21. The computer-implemented method of one of claims 11 to 20, further comprising the step of managing access to the server by the data object definition messages via an authorization management procedure.

22. The computer-implemented method of one of claims 11 to 21, further comprising the step of managing data formats of different clients via a version management procedure.

23. A computer program product readable by a computer and embodying a program of instructions capable of automatically configuring a translation code, the program comprising instructions operable to cause the computer to perform the steps of:
translating data into a data format required by a client using a translation code within the server; transmitting the translated data from the server to the client;
transmitting a change of the data format from the client to the server via a data object definition message; and
automatically adapting the translation code to the changed data format upon the server's reception of the data object definition message.

24. A computer program of instructions capable of automatically configuring a translation code, the program comprising instructions operable to cause the computer to perform the steps of:
translating data into a data format required by a client using a translation code within the server;
transmitting the translated data from the server to the client;
transmitting a change of the data format from the client to the server via a data object definition message; and
automatically adapting the translation code to the changed data format upon the server's reception of the data object definition message.

25. A client-server computer system capable of automatically configuring a translation code, the system comprising:
a code generator, associated with the server, that provides the translation code and that includes a sub-component that adapts the translation code automatically to a change of data format upon receipt of a data object definition message; and
means, which uses the translation code provided by the code generator, for translating data into a data format required by a client;
wherein translated data and the change of data format with the data object definition message are transmitted from the server to the client.
